# NEUE EUROPÄISCHE PATENTSCHRIFT

(11) **EP 2 306 040 B2**
(45) Veröffentlichungstag und Bekanntmachung des Hinweises auf die Entscheidung über den Einspruch: **03.04.2019**
(45) Hinweis auf die Patenterteilung: 08.02.2012
(21) Anmeldenummer: 10185279.6
(22) Anmeldetag: 01.10.2010
(51) Int. Cl.: F16D 55/2265, F16D 55/227, F16J 3/04

(54) **Scheibenbremse und Führungsholm einer Scheibenbremse**
Disk brake and guide bar of a disk brake
Frein à disque et tige d'un frein à disque

(30) Priorität: 05.10.2009 DE 102009048326
(43) Veröffentlichungstag der Anmeldung: 06.04.2011
(73) Patentinhaber: BPW Bergische Achsen KG, 51674 Wiehl (DE)
(72) Erfinder: Abt, Christian, 51643, Gummersbach (DE)
(74) Vertreter: Bungartz Christophersen Partnerschaft mbB Patentanwälte

(56) Entgegenhaltungen:
- EP-A1- 0 510 742
- WO-A1-2005/071280
- WO-A1-2005/071280
- DE-A1- 2 634 892
- DE-A1- 3 309 420
- DE-C3- 2 211 453
- FR-A1- 2 921 137
- GB-A- 2 119 038

## Beschreibung

Die Erfindung betrifft einen Führungsholm für ein Axiallager einer Fahrzeug-Scheibenbremse, der über seine Länge mit Längsabschnitten unterschiedlichen Durchmessers versehen ist, von denen ein Längsabschnitt ein zylindrischer Lagerabschnitt für das Axiallager ist, und ein anderer Abschnitt eine Ringnut zur Festlegung eines Faltenbalgs an dem Führungsholm ist.

Bei Scheibenbremsen für Nutzfahrzeuge wird der als Gleit- bzw. Schwimmsattel ausgebildete Bremssattel über Axiallager mit dem fahrzeugfesten Bremsträger verbunden, um so den Bremssattel längsverschieblich zu dem seine Position beibehaltenden Bremsträger zu führen. Bestandteil des Axiallagers sind Führungsholme, die an ihrem einen Ende fest mit dem Bremsträger verbunden sind, während sie andererseits in Gleitlagern, häufig Gleitlagerbuchsen, des Bremssattels geführt sind.

Zur Vermeidung einer Verschmutzung des Axiallagers ist der sich zwischen dem Bremsträger und den Bremssattel erstreckende Bereich des Führungsholmes von einem Faltenbalg umgeben. Die Dimensionierung des Faltenbalgs wird durch seine Umgebungsteile und durch seine maximale Länge bestimmt. Eine geringe Grundbaulänge wird durch eine geringe Anzahl von Falten erreicht. Es ist erstrebenswert, die Falten möglichst hoch zu gestalten, um eine große Maximallänge zu erzielen, ohne Zugkräfte auf die endseitigen Befestigungen in Kauf nehmen zu müssen. Diesbezüglich wird in der Regel ein Durchmesser der Innenränder der Falten gewählt, der dem Außendurchmesser des Führungsholms entspricht. Der Außendurchmesser der Falten ist durch den einzuhaltenden Sicherheitsabstand gegenüber den durch Bremsenergie aufgeheizten metallischen Umgebungstauteilen vorgegeben. Die an dem Führungsholm anliegenden Falten bilden dabei praktisch Dichtlippen, wodurch sich zwischen benachbarten Falten jeweils abgedichtete Kammern ergeben. Diese sind zwar bei einer langsamen Bewegung des Bremssattels, wie sie beim verschleißbedingten Nachstellen der Bremse erfolgt, unproblematisch. Denn die im Faltenbalg eingeschlossene Luftmenge kann bei einem langsamen Strecken oder Stauchen des Faltenbalgs ausgeglichen werden, etwa durch ein schleichendes Unterströmen der Innenränder der Falten und der im Bereich der Enden angeordneten Dichtlippen. Allerdings ist dieser Druckausgleich bei einer schnellen Relativbewegung zwischen Bremsträger und Bremssattel nicht mehr gewährleistet. Insbesondere wenn Bremsträger und Bremssattel vollständig bis zum Anschlag zusammengeschoben werden, was während der Montage des Bremssattels der Fall ist, kann die zwischen den Falten des Faltenbalgs angesammelte Luft nicht schnell genug entweichen, wodurch es zu einem Aufblähen des Faltenbalgs kommt, verbunden mit einer Gefahr des Lösens der Befestigungen. Bleibt dies unbemerkt, kommt es im späteren Betrieb der Scheibenbremse zu einer Beschädigung des Faltenbalgs oder zu Undichtigkeiten. Dieser Effekt ist besonders stark, wenn der Faltenbalg innerhalb des Bereichs seiner nahezu kompletten Stauchung bewegt wird. In diesem Zustand ist die Volumenänderung zwischen den Falten am größten. Hinzu kommt, dass gleichzeitig die Innenränder der Falten ihren kleinsten Durchmesser einnehmen und somit keinen oder den geringsten Abstand zum Führungsholm aufweisen.

Aus der DE 33 09 420 A1 und der GB 2 119 038 A sind Axiallager für Scheibenbremsen bekannt, die mit einem längeren Lagerabschnitt versehen sind, und bei denen zur Festlegung des Faltenbalgs an dem Führungsholm der Führungsholm mit einer deutlich vertieften Ringnut versehen ist, in der ein am Ende des Faltenabschnitts des Faltenbalgs ausgebildeter Wulst formschlüssig sitzt. Zur Sicherung dieses Formschlusses weist die Ringnut einen Durchmesser auf, der deutlich geringer als der Durchmesser des direkt benachbarten zylindrischen Lagerabschnitts des Führungsholms ist.

Der Erfindung liegt die Aufgabe zugrunde, bei einem Führungsholm für ein Axiallager einer Scheibenbremse durch konstruktiv einfache Mittel die Gefahr einer Beschädigung des den Führungsholm umgebenden Faltenbalgs zu vermeiden, und so die Betriebssicherheit der Scheibenbremse insgesamt zu verbessern.

Zur Lösung der Aufgabe wird ein Führungsholm einer Scheibenbremse mit den Merkmalen des Anspruchs 1 vorgeschlagen.

Durch eine bereichsweise Änderung des Durchmessers des Führungsholms, die, da eine Bearbeitung des Führungsholms ohnehin erforderlich ist, keine zusätzliche Fertigungsstufe erfordert, wird ein Aufblähen des Faltenbalgs und damit eine Fehlmontage oder Beschädigung des Faltenbalgs verhindert. Stattdessen wird, indem der Führungsholm auf einem durch die Stauchlänge des Faltenabschnitts zumindest teilweise überdeckten Längsabschnitt mit einem reduzierten Durchmesser versehen ist, ein Druckausgleich in dem von dem Faltenbalg umschlossenen Luftvolumen ermöglicht, wodurch der Faltenbalg seine zugewiesene Funktion uneingeschränkt und dauerhaft erfüllen kann.

Mit einer Ausgestaltung wird vorgeschlagen, dass der Innendurchmesser des Faltenabschnitts in dessen Stauchstellung gleich dem Durchmesser des Lagerabschnitts ist.

Der an dem Führungsholm ausgebildete Längsabschnitt geringeren Durchmessers wird vorzugsweise durch eine umlaufende Nut mit zylindrischem Nutboden gebildet. Eine solche Nut lässt sich fertigungstechnisch einfach herstellen, zumal im Rahmen der Oberflächenbearbeitung der Gleitflächen des Führungsholms ohnehin ein spanendes Bearbeitungsverfahren erforderlich ist.

Zur Erzielung der maximal möglichen Länge des Axiallagers ist es von Vorteil, wenn unabhängig von der Axialposition des Bremssattels stets ein axialer Abstand zwischen dem Längsabschnitt reduzierten Durchmessers und dem im Schiebekontakt stehenden Längenbereich des Lagerabschnitts vorhanden ist.

Mit einer weiteren Ausgestaltung wird eine zwischen dem Faltenabschnitt und dem Axiallager angeordnete Sekundärabdichtung vorgeschlagen. Diese umfasst vorzugsweise einen am Bremssattel befestigten Dichtring mit einer sich zu dem Führungsholm hin erstreckenden Dichtlippe. Die Dichtlippe ist von solcher Radialerstreckung, dass sie sich zwar gegen den zylindrischen Lagerabschnitt, jedoch nicht gegen den Längsabschnitt reduzierten Durchmessers abzustützen vermag. Dies ermöglicht, wenn Bremssattel und Bremsträger stark zueinander geschoben sind, ein Unterströmen dieser Dichtlippe, und damit ein Entweichen von Luft aus dem im übrigen umschlossenen Luftvolumen.

Die Sekundärabdichtung soll bei defektem Faltenbalg dort eindringenden Schmutz von dem Axiallager fern halten. Es ist davon auszugehen, dass ein Defekt der Falten erst nach einer gewissen Betriebsdauer auftritt. Deshalb ist es alternativ möglich, den Längsabschnitt reduzierten Durchmessers bis in jenen axialen Bereich hinein zu legen, in dem sich die Sekundärabdichtung zu Beginn der Standzeit der Bremsscheibe und der Bremsbeläge befindet.

Ein Ausführungsbeispiel der Erfindung wird nachfolgend anhand der Zeichnungen erläutert. Darin zeigen:
- Fig. 1: in perspektivischer, zum Teil geschnittener Ansicht eine Fahrzeugscheibenbremse vom Schwimmsattel-Typ, wobei die Bremsscheibe und die Bremsbeläge der Scheibenbremse weggelassen sind;
- Fig. 2: in gegenüber Fig. 1 vergrößerter Darstellung einen an dem Bremsträger der Scheibenbremse befestigten und von einem Faltenbalg umgebenen Führungsholm, sowie Teile des darauf längsbeweglich sitzenden Bremssattels;
- Fig. 3: eine stark vergrößerte Detaildarstellung für den Fall, dass Bremsträger und Bremssattel unter maximaler Stauchung des Faltenbalgs gegeneinander geschoben sind;
- Fig. 4: die Gegenstände nach Fig. 3, jedoch bei einer Relativlage von Bremsträger und Bremssattel, wie sie im Neuzustand von Bremsscheibe und Bremsbelägen der Fall ist, und
- Fig. 5: die Gegenstände nach Fig. 3, jedoch bei einer Relativlage von Bremsträger und Bremssattel, wie sie bei stark abgenutzten Bremsbelägen der Fall ist.

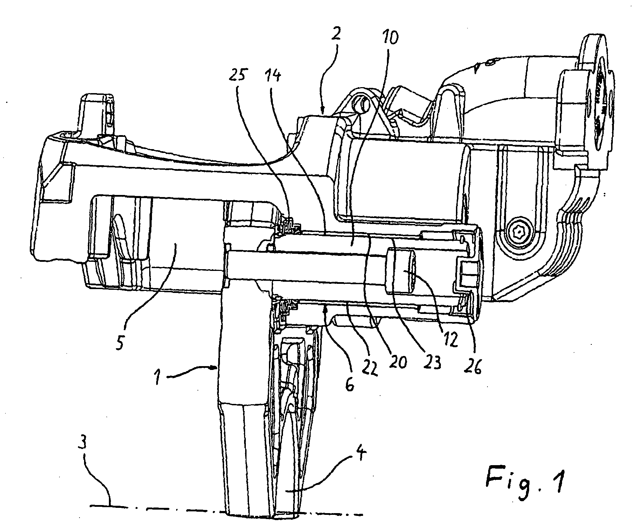

Die in Fig. 1 wiedergegebene Scheibenbremse für ein Fahrzeug und insbesondere für einen Schwerlast-Nutzfahrzeuganhänger besteht in erster Linie aus einem fahrgestellfesten Bremsträger 1 und einem schwimmend, d. h. längsbeweglich an dem Bremsträger 1 befestigten Bremssattel 2. Andere, ebenfalls wichtige Bauteile der Scheibenbremse sind nicht wiedergegeben, da im Rahmen der Erläuterung der Erfindung weniger bedeutsam. Dies gilt etwa für die um die Drehachse 3 drehbare Bremsscheibe, und für die in einem Belagschacht 5 angeordneten Bremsbeläge der Scheibenbremse. Die Betätigung der Bremse erfolgt, wie bei Nutzfahrzeugbremsen üblich, durch Druckluft.

Der Bremsträger 1 ist ein so genannter rahmenloser Bremsträger. Er ist flach gestaltet und umgreift oder übergreift die Bremsscheibe nicht. Er erstreckt sich parallel zur Bremsscheibe sowie quer zu der Drehachse 3 der Bremsscheibe und ist mittels einer maulartigen Öffnung mit einem Fahrwerksteil des Fahrzeugs verbindbar, beispielsweise der Achse des Fahrzeugs. An seinem Ende ist der Achskörper mit der Lagerung für das Fahrzeugrad und die Bremsscheibe versehen, die sich daher beide um die mit der Mittellinie 3 zusammenfallende Drehachse drehen.

Der Bremsträger 1 ist, der Achse abgewandt, mit einer Ausnehmung versehen, in welcher mit geringem Spiel der fahrzeuginnere der beiden Bremsbeläge sitzt, so dass die Bremsmomente von diesem Bremsbelag unmittelbar auf den Bremsträger 1 und von dort auf die Achse abgeführt werden. Hingegen sitzt der äußere Bremsbelag in dem Bremssattel 2, welcher zu diesem Zweck mit Abstützflächen versehen ist, welche die Bremsmomente des äußeren Bremsbelags aufnehmen.

Die so an dem Bremssattel 2 wirkenden Brems- bzw. Bremsreaktionsmomente müssen auf den fahrwerksfesten Bremsträger 1 übertragen werden. Zu diesem Zweck ist der Bremssattel 2 über zwei Axiallager 6 in Längsrichtung beweglich an dem Bremsträger 1 angeordnet. Das auf der Zeichnung dargestellte erste Lager 6 ist als Festlager ausgebildet, und ein anderes, parallel versetzt angeordnete Lager als Loslager. Üblicherweise wird als Festlager eine präzis arbeitende Axialführung bezeichnet, welche im Bremsbetrieb den Bremssattel 2 möglichst reibungsarm führt, um so den außen liegenden Bremsbelag gegen die Bremsscheibe zu bewegen.

Bestandteil des Axiallagers 6 ist auf Seiten des Bremsträgers 1 ein länglicher Führungsholm 10, der an seinem einen Ende mittels einer Schraube 12 stark gegen den Bremsträger 1 befestigt ist. Abgewandt zu dieser Befestigung ist der Führungsholm mit einem zylindrischen Lagerabschnitt 14 versehen, welcher das erste Element des Axiallagers 6 bildet. Zu diesem Zweck ist der zylindrische Lagerabschnitt 14 des Führungsholms entsprechend exakt bearbeitet, etwa durch Überdrehen und anschließendes Schleifen.

Bestandteil der Axialführung 6 auf Seiten des Bremssattels ist eine in eine Bohrung 20 des Bremssattels eingesetzte Lagerbuchse 22. Die zylindrische Bohrung 20 ist unmittelbar im Material des Bremssattels 2 ausgebildet, wohingegen die Lagerbuchse 22 vorzugsweise eine dauergeschmierte Gleitlagerbuchse ist, deren Innenwandung 23 das zweite Element des Axiallagers 6 bildet.

Um ein Eindringen von Staub und Schmutz in den Bereich dieser Führung zu verhindern, sind zu beiden Enden der Führung hin Dichtungen vorgesehen. Zum Bremsträger 1 hin ist zur Abdichtung ein Faltenbalg 25 vorgesehen. Das andere, also dem Bremsträger 1 abgewandte Ende der Führung ist durch eine Kappe 26 abgedichtet, die auf eine dort vorhandene Öffnung des Bremssattels 2 aufgesteckt ist.

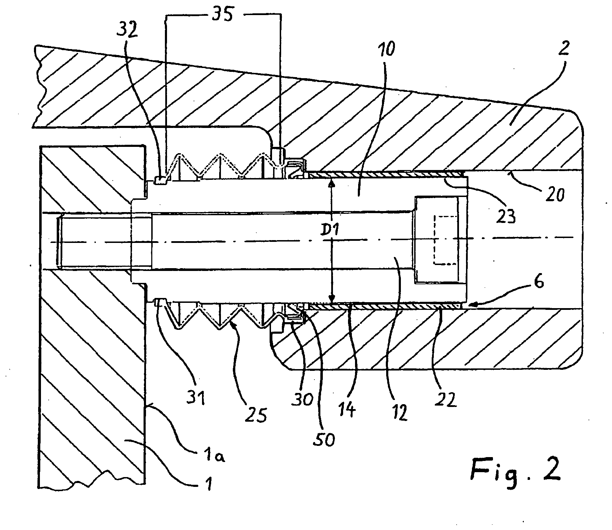

Gemäß Fig. 2 ist der den Führungsholm 10 auf einem Teil seiner Länge umgebende Faltenbalg 25 an seinem auf der Zeichnung rechts dargestellten Ende mit einem angeformten Dichtabschnitt 30 gegenüber dem Bremssattel 2 abgedichtet. Hierzu sitzt der Dichtabschnitt 30 in einer entsprechend gestalteten, den Führungsholm umgebenden Ausdrehung bzw. Stufe des Bremssattels 2.

Das andere, dem Bremsträger 1 zugewandte Ende des Faltenbalgs 25 ist nahe des Bremsträgers 1 direkt an dem Führungsholm 10 befestigt. Zu diesem Zweck ist der Führungsholm 10 in geringem axialem Abstand zu der Außenseite 1 a des Bremsträgers 1 mit einer umlaufenden Ringnut 31 versehen, die hier als Rechtecknut gestaltet ist. In der Ringnut 31 sitzt ein Wulst 32, welcher das dem Bremsträger 1 zugewandte Ende des Faltenbalgs 25 bildet. Der Wulst 32 ist einstückiger Bestandteil des aus elastischem Material und vorzugsweise Gummi bestehenden Faltenbalgs 25. Der Wulst 32 ist von größerer Dicke als die Tiefe der Ringnut 31, so dass er sich zum Teil in und zum anderen Teil außerhalb der Ringnut 31 befindet. Ist der Wulst 32 von ausreichend großer Eigenspannung, so kann er ohne Hilfsmittel in der Ringnut 31 sitzen. Zusätzliche Mittel zur Sicherung des Wulstes 32 in der Ringnut 31 sind in diesem Fall nicht erforderlich.

Zwischen dem am Führungsholm festgelegten Wulst 32 und dem am Bremssattel festgelegten Dichtabschnitt 30 erstreckt sich der eigentliche Faltenabschnitt 35 des Faltenbalgs. Bei dem hier wiedergegebenen Ausführungsbeispiel besteht der Faltenabschnitt 35 aus insgesamt fünf Falten, d. h. Umlenkungen.

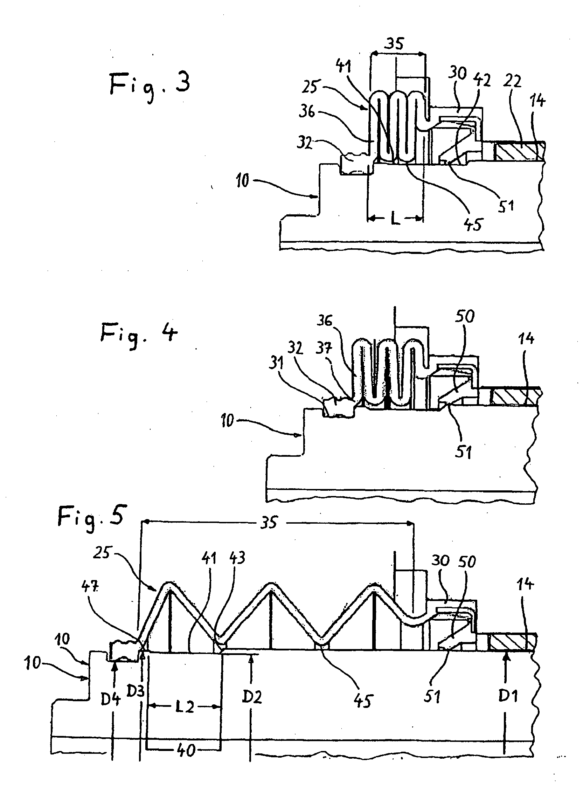

Sind Bremssattel und Bremsträger maximal zusammengefahren, wie dies in Fig. 3 wiedergegeben ist, nimmt der Faltenabschnitt 35 seine Stauchlänge L ein. Die einzelnen Falten liegen aneinander an, und die Umlenkungen betragen 180°. Nehmen hingegen Bremssattel und Bremsträger aufgrund stark verschlissener Bremsbeläge die in Fig. 5 wiedergegebene Relativposition ein, so weist der Faltenabschnitt 35 seine Strecklänge auf, und die Umlenkung der Falten beträgt nur noch ca. 90°.

Der Übergang zwischen dem Wulst 32 und der angrenzenden ersten Falte 36 des Faltenabschnitts 35 ist als Gelenk 37 ausgeführt, um das herum die erste Falte 36 bis in eine zur Achse des Führungsholms rechtwinklige Stellung aufstellbar ist.

Wie vor allem in Fig. 5 illustriert, ist der Führungsholm 10 zwischen der Ringnut 31 und dem den Durchmesser D1 aufweisenden Lagerabschnitt 14 mit einem Längsabschnitt 40 mit einem Durchmesser D2 versehen, wobei D2 geringer als D1 ist.

Die Fign. 3 und 4 zeigen dass, in Längsrichtung betrachtet, die Länge L2 des reduzierten Längsabschnitts 40 zumindest einen großen Teil die Länge L des maximal gestauchten Faltenabschnitts 35 überdeckt.

Auf dem Längsabschnitt 40 weist der Führungsholm 10 eine Eindrehung 41 in Gestalt einer umlaufenden Nut auf. Diese wird vorzugsweise im Rahmen der übrigen Bearbeitung der Außenflächen des Führungsholms 10 hergestellt. Der Kreisquerschnitt des Führungsholms ist also im Bereich des Längsabschnitts 40 bzw. der Eindrehung 41 kleiner, als auf dem zylindrischen Lagerabschnitt 14 des Axiallagers. So kann z. B. kann der Durchmesser D1 auf dem zylindrischen Lagerabschnitt 14 etwa 37 mm betragen, hingegen der reduzierte Durchmesser D2 auf dem Längsabschnitt 40 nur 36 mm. Der Übergang zwischen Abschnitt 40 und Lagerabschnitt ist als Schräge 43 gestaltet. Die Länge der Eindrehung 41 und damit die Länge L2 des Längsabschnitts 40 sollte, um die Falten ausreichend zu überdecken, zwischen 7,5 mm und 12 mm betragen. Auf diese Weise ergibt sich eine axiale Länge L2 des reduzierten Längsabschnitts 40, die zwischen einem Fünftel und einem Drittel des Durchmessers D1 auf dem Lagerabschnitt 14 beträgt.

Der Durchmesser D2 kann konstruktiv ohne eine aufwendige Neuberechung der Haltbarkeit des Führungsholmes bis nahe zu dem Durchmesser D4 der Ringnut 31 reduziert werden. Eine zu starke Reduzierung des Durchmessers D1 ist unter anderem auf Grund der Flächenpressung und der steigenden Gefahr zum Verkanten nicht möglich.

Wie Fig. 3 erkennen lässt, besteht der Vorteil der Eindrehung 41 auf dem Längsabschnitt 40 darin, dass es zwischen den auf dem Durchmesser D1 liegenden Innenrändern 45 der Falten und der Außenseite des Führungsholms 10 selbst dann zu keinem Kontakt kommt, wenn der Faltenabschnitt 35 seine Stauchlänge L aufweist, d. h. die Falten aneinander liegen und sich daher ihre Innenränder 45 relativ weit radial innen befinden. Durch den so erzielten radialen Abstand zwischen den Innenrändern 45 und dem Boden 42 der Eindrehung 41 bzw. Nut kann Luft hindurch treten, und so den Druckausgleich innerhalb des von den Falten umschlossenen Luftvolumens bewirken.

Zwischen der zylindrischen Eindrehung 41 und der Ringnut 31 weist der Führungsholm 10 einen möglichst kurzen Längsabschnitt 47 auf, dessen zylindrischer Durchmesser D3 größer ist als der reduzierte Durchmesser D2, jedoch nicht größer als der Durchmesser D1 der Gleitlagerung.

Zu einem verbesserten Druckausgleich trägt ferner bei, dass in den Dichtabschnitt 30 als Sekundärabdichtung ein Dichtring 50 mit einer sich zu dem Führungsholm hin erstreckenden Dichtlippe 51 integriert ist.

Ein Vergleich der Figuren 3, 4 und 5 zeigt, dass sich die Dichtlippe 51 des Dichtrings 50, abhängig von der Relativposition zwischen Bremssattel und Bremsträger, entweder zu dem zylindrischen Lagerabschnitt 14 oder zu dem im Durchmesser reduzierten Längsabschnitt 40 hin erstreckt.

Sind gemäß Fig. 5 Bremssattel und Bremsträger in Folge starken Bremsbelagverschleißes maximal voneinander entfernt, steht die Dichtlippe 51 in Kontakt zu dem zylindrischen Lagerabschnitt 14, wodurch der Dichtring 50 eine sekundäre Barriere gegen ein Eintreten von Schmutz und Staub in das Axiallager bildet.

Auch in dem in Fig. 4 wiedergegebenen Zustand, welcher sich bei neuen, unverbrauchten Bremsbelägen einstellt, liegt die Dichtlippe 51 abdichtend gegen den Lagerabschnitt 14 an.

Sind hingegen, wie in Fig. 3 wiedergegeben, Bremssattel und Bremsträger zu Montagezwecken maximal ineinander geschoben, so ragt die Dichtlippe 51 in die Eindrehung bzw. Nut 41, ohne allerdings den Boden 42 der Eindrehung zu berühren. In dieser Stellung ist daher ein Unterströmen der Dichtlippe 51 und damit ein Druckausgleich möglich. Der Vorteil der Schräge 43 besteht darin, dass die Dichtlippe 51 schonend vom Abschnitt 40 auf den Abschnitt 14 hinübergleiten kann.

### Bezugszeichenliste

- 1: Bremsträger
- 1 a: Außenseite
- 2: Bremssattel
- 3: Drehachse
- 4: Öffnung
- 5: Belagschacht
- 6: Axiallager
- 10: Führungsholm
- 12: Schraube
- 14: zylindrischer Lagerabschnitt
- 20: Bohrung
- 22: Lagerbuchse
- 23: Innenwandung
- 25: Faltenbalg
- 26: Kappe
- 30: Dichtabschnitt
- 31: Ringnut
- 32: Wulst
- 35: Faltenabschnitt
- 36: erste Falte
- 37: Gelenk
- 40: Längsabschnitt
- 41: Nut, Eindrehung
- 42: Boden
- 43: Schräge
- 45: Innenrand
- 47: Längsabschnitt
- 50: Dichtring
- 51: Dichtlippe
- D1: Durchmesser
- D2: Durchmesser
- D3: Durchmesser
- D4: Durchmesser
- L: Stauchlänge
- L2: Länge

## Patentansprüche

1. Führungsholm (10) für ein Axiallager einer Fahrzeug-Scheibenbremse, der über seine Länge mit Abschnitten unterschiedlichen Durchmessers versehen ist, von denen ein Längsabschnitt ein zylindrischer Lagerabschnitt (14) für das Axiallager und ein anderer Abschnitt eine Ringnut (31) zur Festlegung eines Faltenbalgs an dem Führungsholm (10) ist, **gekennzeichnet durch** einen weiteren zylindrischen Längsabschnitt (40), der sich zwischen der Ringnut (31) und dem Lagerabschnitt (14) befindet, wobei der weitere zylindrische Längsabschnitt (40) einen Durchmesser (D2) aufweist, der geringer als der Durchmesser (D1) auf dem Lagerabschnitt (14) ist, und seine axiale Länge (L2) zwischen einem Fünftel und einem Drittel des Durchmessers (D1) auf dem Lagerabschnitt (14) beträgt.

## Claims

1. A guide bar (10) for an axial bearing of a vehicle disc brake which is provided over its length with portions of different diameter, one longitudinal portion of which is a cylindrical bearing portion (14) for the axial bearing and another portion of which is an annular groove (31) for fastening a folding bellows to the guide bar (10), **characterized by** a further cylindrical longitudinal portion (40) which is present between the annular groove (31) and the bearing portion (14), wherein the further cylindrical longitudinal portion (40) has a diameter (D2) which is smaller than the diameter (D1) on the bearing portion (14) and its axial length (L2) amounts to between a fifth and a third of the diameter (D1) on the bearing portion (14).

## Revendications

1. Longeron de guidage (10) destiné à un palier axial d'un frein à disque de véhicule, qui est doté sur une longueur de parties de diamètre différent, dont une partie longitudinale est une partie de palier (14) cylindrique pour le palier axial et une autre partie une rainure annulaire (31) pour la fixation d'un soufflet sur le longeron de guidage (10), **caractérisé par** une autre partie longitudinale (40) cylindrique, qui se trouve entre la rainure annulaire (31) et la partie de palier (14), l'autre partie longitudinale (40) cylindrique présentant un diamètre (D2), qui est inférieur au diamètre (D1) sur la partie de palier (14), et sa longueur axiale (L2) se situant entre un cinquième et un tiers du diamètre (D1) sur la partie de palier (14).
